# EUROPEAN PATENT SPECIFICATION

(11) **EP 4 092 639 B1**
(45) Date of publication and mention of the grant of the patent: **19.11.2025**
(21) Application number: 22173767.9
(22) Date of filing: 17.05.2022
(51) Int. Cl.: G07C 9/00, G07C 9/37

(54) **ELECTRONIC SAFETY FUNCTION LOCK-UNLOCK SYSTEM**
ELEKTRONISCHES SICHERHEITSFUNKTIONS- VERRIEGELUNGS-/ENTRIEGELUNGSSYSTEM
SYSTÈME DE VERROUILLAGE-DÉVERROUILLAGE À FONCTION DE SÉCURITÉ ÉLECTRONIQUE

(30) Priority: 20.05.2021 US 202117326264
(43) Date of publication of application: 23.11.2022
(73) Proprietor: Rockwell Automation Technologies, Inc., Mayfield Heights, OH 44124 (US)
(72) Inventor: Zhang, Yanbin, Shanghai (CN); Peng, Xiaobo, Shanghai (CN); Dotson, Gary D., Milwaukee, WI (US); Mason, Christopher G., Milwaukee, WI (US)
(74) Representative: Grünecker Patent- und Rechtsanwälte PartG mbB

(56) References cited:
- CN-A- 110 110 614
- US-A1- 2016 282 854
- US-A1- 2018 321 661
- ANONYMOUS: "Redundancy (engineering) - Wikipedia", 15 September 2011 (2011-09-15), XP055566734, Retrieved from the Internet <URL:https://en.wikipedia.org/w/index.php?title=Redundancy_(engineering)&direction=prev&oldid=452415026> [retrieved on 20190308]

## Description

### BACKGROUND INFORMATION

During maintenance of industrial equipment, it is often necessary for maintenance personnel to work on machinery which could pose a hazard if not fully deactivated, or if accidentally reactivated, during maintenance. For this reason, it is known to use lockout, tagout (LOTO) procedures to ensure removal of power from such equipment for maintenance and to prevent accidental premature reconnection of power to the equipment. Lockout devices provide a means that positively disconnects electrical power to the associated equipment. Such lockout devices may be locked in the disconnect position with one or more locks such as Kirk keys, one or more padlocks (one padlock for each maintenance person in the vicinity of the machine) and the like. Printed warning tags are also affixed to and displayed on the equipment to provide a "tagout" notification that cautions against operation of the equipment. The lockout padlocks and printed tagout warning tags comply with safety standards such as OSHA standard 29 CFR 1910.147 to provide a simple and reliable mechanism to ensure the machine is not activated accidentally or without the concurrence of all maintenance personnel working on the equipment.

In some cases, rather than using physical padlocks and associated tags, a remote low-voltage lockout system is provided to allow for lockout and tagout operations to be carried out without use of physical padlocks and printed tags. Such lockout systems use a combination of redundant wiring, safety-rated controllers, safety monitoring relays and redundant isolation contactors to meet safety standards such as ANSI Z244.1. The remote lockout system is operatively connected an electrical power switch unit. Based upon operator input to a human-machine interface (HMI), the remote lockout system operates the electrical power switch unit to disconnect electrical power from the machine being serviced, until such time as an operator interacts with the HMI again to control the remote lockout system to operate the electrical power switch unit to reconnect electrical power to the machine being serviced.

A need has been identified for a new and improved remote low-voltage lockout system that provides enhanced functionality beyond that associated with known systems to provide for improved safety, reliability, security, audit capabilities, and operator convenience.

US 2016/0282854 A1 relates to techniques for recommending components for an industrial system. The technique receives historical data associated with placing a machine in an industrial environment offline, determines one or more recommendations for the machine, one or more parts of the machine, or both based on the historical data, determines an authority level of one or more users requesting to place the machine offline, and displays the one or more recommendations based on the authority level of the one or more users.

US 2018/0321661 A1 relates to techniques for virtually tagging and securing industrial equipment. The technique includes receiving a set of user data associated with the user that is attempting to access an electronic lock, receiving a request to actuate a locking mechanism of the electronic lock configured to prevent the user from accessing a machine in an industrial automation system, actuating the locking mechanism in response to the request and the set of user data corresponding to an expected set of data, storing a log of the request and the set of user data, and sending the log to a cloud-based computing system.

CN 110110614 A relates to gesture recognition based on a 3D camera.

The Wikipedia article on the keyword "redundancy (engineering)", September 15, 2011, states that in engineering, redundancy is the duplication of critical components or functions of a system with the intention of increasing reliability of the system, usually in the form of a backup or fail-safe.

### Brief description

It is the object of the present invention to improve the prior art systems. This object is solved by the subject matter of the independent claims. Preferred embodiments are defined by the dependent claims.

In accordance with one aspect of the present development, an electronic safety function lock-unlock system includes the features of appended claim 1.

In accordance with another aspect of the present development, a method of selectively locking and unlocking an industrial system, includes the features of appended claim 6.

### BRIEF DESCRIPTION OF THE DRAWINGS

Fig. 1. illustrates one example of electronic safety function lock-unlock system provided in accordance with an embodiment of the present development.
Fig. 2. illustrates an example of electronic safety function lock-unlock system provided in accordance with another embodiment of the present development.
Fig. 3. shows a human machine interface (HMI) device provided in accordance with an embodiment of the present disclosure.
Fig. 4 is similar to Fig. 3 and further shows an operator interacting with the HMI device via biometric data.
Fig. 5 is similar to Figs. 3 and further shows an operator interacting with the HMI device via hand gestures.
Fig. 6 is a schematic illustration of the HMI device of Figs 3 - 5.
Fig. 7 is a flow chart that illustrates a lock-unlock method, with optional authorization check and optional vocal acknowledgement, according to an embodiment of the present disclosure;
Fig. 8 is a flow chart that illustrates a safety counter system and method according to an embodiment of the present development.

### DETAILED DESCRIPTION

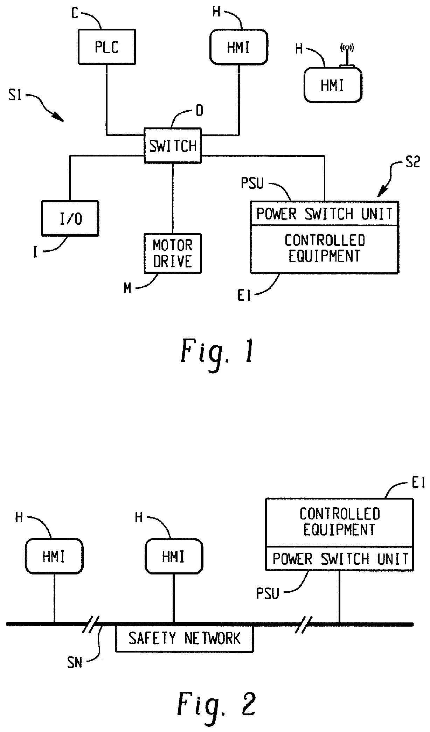

Fig. 1. illustrates one example of electronic safety function lock-unlock system S1 provided in accordance with an embodiment of the present development. The system S1 is operably connected to and controls an associated controlled system S2 comprising industrial equipment E1 that includes and/or is connected to a power switch unit PSU. The power switch unit PSU comprises one or more mechanical and/or solid-state switches that control the conduction of electrical power to the industrial equipment E1. The industrial equipment E1 can comprise electrical and/or electro-mechanical systems such as electrical switchgear and/or motors or other electro-mechanical actuators or any other electrical and/or mechanical equipment. The power switch unit PSU is selectively controlled to either conduct electrical power to the industrial equipment E1 or disconnect the industrial equipment E1 from the electrical power.

The lock-unlock system S1 comprises at least one human machine interface (HMI) device H by which a human operator provides input to the lock-unlock system S1 and the controlled system S2. The one or more HMI devices H1,H2 typically also provide output to the human operator such as visual and/or audible output concerning the state and/or other operating parameters of the lock-unlock system S1 and/or controlled system S2. As shown herein, the lock-unlock system includes a first HMI device H that is hard-wired to the lock-unlock system S1 also includes a second HMI device H that is wirelessly operably connected to the lock-unlock system S1 by a suitable wireless connection such as a Bluetooth or Wi-Fi connection but that is otherwise identical to the hard-wired HMI device H.

The lock-unlock system S1 can comprise a data switch D such as an ethernet switch to which the HMI devices H and other components such as the power switch unit and the industrial equipment E1 are operably connected. The lock-unlock system S1 can also include a controller C such as a programmable logic controller (PLC), one or more distributed I/O devices I, and/or one or more motor drive devices M that provide input of data and/or control commands to the controlled system S2 and/or that receive output data or signals from the controlled system S2.

The one or more HMI devices H are operably connected to the power switch unit PSU of the controlled system S2 through the data switch D or otherwise (e.g., a direct wired or wireless connection) such that a human operator can operate the power switch unit PSU using the HMI devices H to either conduct or interrupt the electrical power connection to the industrial equipment E1. As shown in Fig. 1, the HMI devices H are located adjacent or otherwise local to the controlled system S2. Alternatively, as shown in Fig. 2, each HMI device H or any one of the HMI devices can be located remotely from the controlled system S2 and communicate with the power switch unit PSU of the controlled system S2 over a wired or wireless data network such as the illustrated safety network SN.

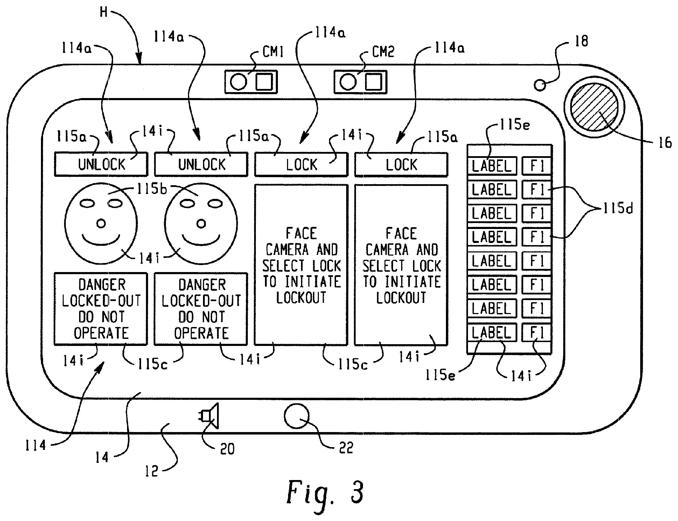

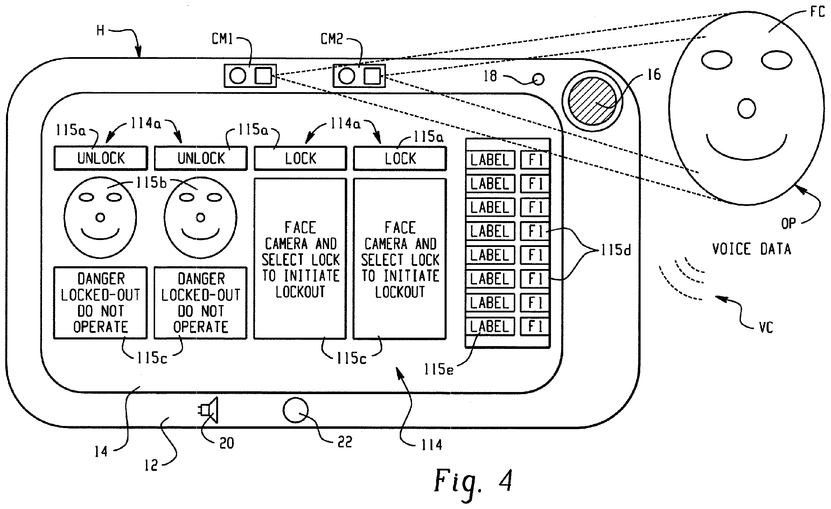

The HMI devices H can include conventional computer system input/output devices such as a keyboard, keypad, one or more mechanical switches, a visual display such as a touchscreen display for combined input and output, indicator lights, and the like. The HMI device H can also include a processor and memory and can perform general purposes computing operations based upon one or more stored programs. As shown in Fig. 3, the illustrated HMI devices H each include a housing 12 that supports a touchscreen display or "touchscreen" 14 for output of visual information to a human operator and for receiving touchscreen input from the operator. In one example, the touchscreen 14 is a touch-resistive and/or touch-capacitive display that senses contact by a finger of the human operator. The touchscreen 14 can be a safety touchscreen that comprises both capacitive and resistive sensing inputs to provide redundant input to the lock-unlock system S1. The touchscreen 14 outputs one or more visual icons or other graphical elements 14i that provide visual output information to a human operator user OP (Fig. 4), and the user physically touches one or more of these graphical elements 14i with a finger or other body part to provide input data to the HMI and lock-unlock system S1. Each HMI device H further includes an emergency stop (Estop) switch 16 (or "button") by which an operator can stop or at least slow the machine(s) E1 being controlled in an emergency or other situation. When activated, the Estop switch 16 can cause the system S1 to interrupt electrical power to the controlled Equipment E1. The HMI devices H can include one or more visual output indicators such as the illustrated LED light 18 and can also include a speaker 20 for providing audible output indicators to the user. The HMI devices H can also comprise at least one microphone input device 22 such as a MEMS microphone for receiving sound data from the operator or other sound data from the ambient environment.

Each HMI device H further includes at least one camera that is used for facial recognition and gesture recognition as described in detail below. As shown in the illustrated example, the HMI devices H comprises first and second redundant 3-Dimensional (3D) time-of-flight (ToF) cameras CM1,CM2 such as the illustrated laser-ranging 3D cameras that enable 3D facial recognition and gesture recognition of a human operator of the HMI. As shown in Fig. 4, the redundant cameras CM1,CM2 of the HMI device H are configured to capture a 3D image of the face FC of a human operator OP. The first and second cameras CM1,CM2 independently generate respective first and second 3D facial images and the HMI device H or another part of the system S1 compares the first and second 3D facial images to each other to confirm that they match, i.e., to confirm that both of the first and second 3D facial images represents the same person. The microphone 22 senses any voice data originating from the human operator OP for reasons described further below.

In one non-limiting example, the touch screen display 14 is configured to display a lock-unlock graphical user interface (GUI) 114 as shown in Figs. 3 & 4. The GUI 114 comprises a plurality of lock-unlock control regions 114a that each include user selectable graphical elements 14i including: a lock/unlock display element 115a, a user facial image display element 115b, and a warning display element 115c. The GUI 114 can also comprise one or a plurality of configurable function display elements 115d, each of which are configured to perform a select function as indicated by an adjacent label display element 115e.

The lock-unlock display elements 115a each comprise a user-selectable button display element. In one embodiment, each lock-unlock display element 115a toggles or alternates between displaying a lock message (e.g., "LOCK") when the corresponding lock-unlock control region 114a is ready to accept lock input from an operator and an unlock message (e.g., "UNLOCK") when the lock-unlock control region 114a is ready to accept unlock input from an operator. A lock-unlock control region 114a of the GUI 114 is in a locked mode when an operator OP has interacted with the HMI device H as described herein to initiate a lock process (a power interruption process) for the HMI device H with respect to the controlled industrial equipment E1. Alternatively, a lock-unlock control region 114a of the GUI 114 is an unlocked mode when it is not in a locked mode, i.e., when an operator OP has not interacted with that lock-unlock control region 114a or otherwise with the HMI device H to initiate a lock process (a power interruption process) for the HMI device H with respect to the controlled industrial equipment E1.

Also, when a lock-unlock control region 114a of the GUI 114 is in a locked mode, the corresponding facial image display element 115b thereof displays a facial image of the operator who initiated the locked mode (i.e., the facial image display element 115b displays the "lock operator facial image" of the "lock operator") as captured by either one of the cameras CM1,CM2 so that the same operator or another operator or other viewer of the display 14 is aware of the identity of the particular operator who initiated the locked mode associated with that particular lock-unlock control region 114a. The name of the operator represented by the facial image displayed by the facial image display element 115b can also optionally be displayed based upon facial recognition data or other stored data in the HMI device H that associates the facial image captured by the cameras CM1,CM2 with the name of the operator. When the lock-unlock control region 114a is not in a locked mode, the facial image display area 115b does not display a facial image (but could display a generic icon or other generic image representing a face).

Additionally, when a lock-unlock control region 114a of the GUI 114 is in a locked mode, the warning display element 115c thereof displays a warning message indicating that an operator (as pictured by the facial image display element 115b) has placed the controlled equipment E1 in a locked (powered-down) state and that the equipment E1 should not be operated. Alternatively, when the lock-unlock control region 114a of the GUI 114 is in the unlocked mode, the warning display element 115c can be used to provide use visual instructions and/or other instructions to an operator OP as to how to initiate the locked state.

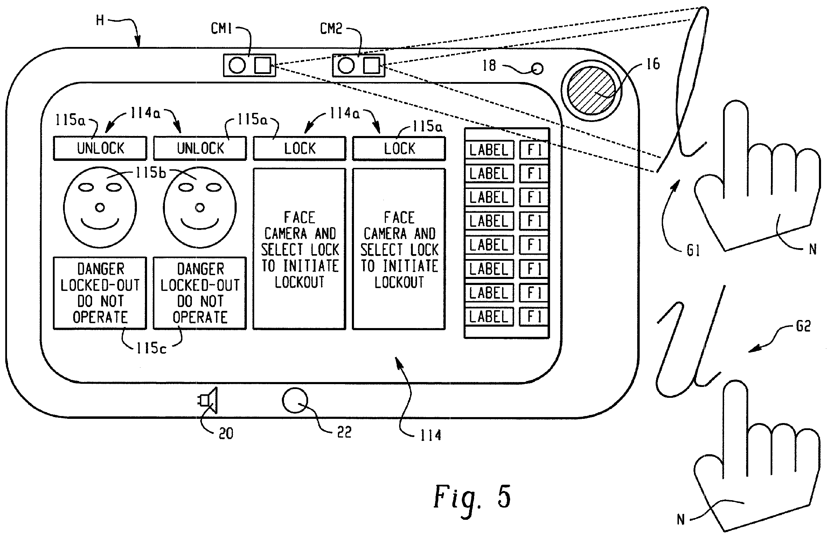

Similarly, as shown in Fig. 5, the redundant cameras CM1,CM2 of the HMI device H are configured to capture hand gesture data representing at least first and second hand gestures G1, G2 provided by the hand N of the human operator OP. The first and second cameras CM1,CM2 independently capture respective first and second gesture images, and the HMI device H or another part of the system S1 compares the first and second captured gestures images to each other to confirm that they match, i.e., to confirm that both of the first and second gesture images represents the same gesture to provide a redundancy. If the first and second gesture images captured respectively by the first and second cameras CM1,CM2 do not match, the first and second gestures images are disregarded. In one example as shown in Fig. 5, the cameras CM1,CM2 are configured to capture at least: (i) a first gesture G1 such as the shape of a lowercase letter "L" that indicates the input of a "LOCK" command to the HMI device H and system S1; and (ii) a second gesture G2 such as the shape of a lowercase letter "U" that indicates the input of an "UNLOCK" command to the HMI device H and system S1. As noted, the first and second redundant gesture images independently respectively captured by the first and second cameras CM1,CM2 are compared against each other in the HMI or elsewhere in the system S1 to ensure that they match to ensure that that the gesture input provided to the HMI device H is properly interpreted.

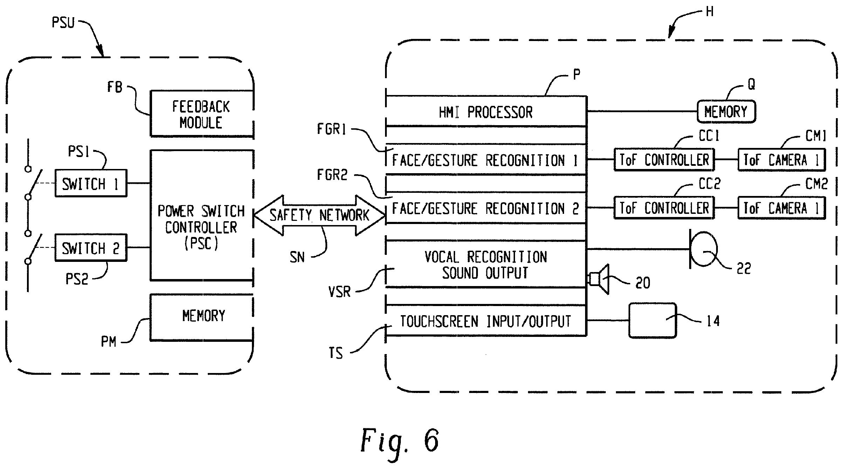

FIG. 6 is a schematic illustration of the HMI device H and its operative connection to the power switch unit PSU via safety network SN. The first and second time-of-flight (ToF) 3D cameras CM1,CM2 are operatively connected to and controlled respectively by first and second camera controllers CC1,CC2. The camera controllers CC1,CC2 are each operatively connected to an HMI processor P such as a microprocessor or other processor that can comprise a programmed general-purpose processor and/or an application-specific integrated circuit (ASIC) or another electronic processor. The first and second cameras CM1,CM2 thus provide facial recognition data and gesture data to the HMI processor P. The processor P implements first and second facial recognition and gesture recognition modules or processes FGR1,FGR2 that respectively independently process the camera image data received from the first and second cameras CM1,CM2 to provide redundant facial recognition and gesture recognition output that must agree or correspond with each other or it is disregarded. The processor P also implements a voice recognition and sound output module VSR that receives and processes sound input data (e.g., voice data VC as shown in Fig. 4) from the microphone 22 and that controls output of sound signals to the speaker 20. The processor P further implements a touchscreen input/output module TS that receives and processes touchscreen input from the touchscreen 14 and that generates the graphical elements 14i displayed on the touchscreen 14. The HMI further comprises memory Q such as volatile and/or non-volatile random-access memory (RAM) or other computer memory device(s) operatively connected to the HMI processor P. When an operator OP interacts with the HMI device, the HMI device H is able to receive: (i) facial recognition data via first and second 3D cameras CM1,CM2 that represents the appearance and three-dimensional structure of the operator's face FC; (ii) gesture data via first and second 3D cameras CM1,CM2 that represents the hand gestures performed by the operator OP; and (iii) voice data VC via microphone 22 that represents the voice of the operator OP.

The HMI device H and, more particularly, the HMI processor P thereof, is operatively connected to the power switch unit (PSU) of the controlled system S2 through a wired or wireless network connection such as the illustrated hard-wired safety network SN or the like. The power switch unit PSU, itself comprises a power switch controller PSC operatively connected by the network SN to the HMI processor P. The power switch controller PSC can comprise a microprocessor or other processor such as, for example, a programmed general-purpose processor and/or an application-specific integrated circuit (ASIC). The power switch controller PSC is operatively connected to and controls at least one and preferably first and second redundant power switches PS1,PS2 that each interrupt power conduction to the industrial equipment E1 (Fig. 1) when open.

With continuing reference to Fig. 6, the power switch unit PSU also comprises a feedback module FB that monitors the actual state (open/non-conductive or closed/conductive) of the one or more power switches PS1,PS2 and that outputs at least one switch feedback signal to the power switch controller PSC and to the HMI processor P that indicates the actual state of the one or more power switches PS1,PS2. In one example, the feedback module FB outputs respective first and second switch feedback signals for the first and second power switches PS1,PS2. In another example, the feedback module FB outputs a single switch feedback signal that indicates the overall conductive state (conductive or non-conductive) of the power switch unit PSU. As described in more detail below, the power switch controller PSC and HMI processor P use the switch feedback signal(s) received from the feedback module FB to verify that the power switch(es) PS1,PS2 and/or the power switch unit PSU is/are actually in the state as set by the HMI processor P before proceeding further with and before indicating the completion of a lock or unlock operation.

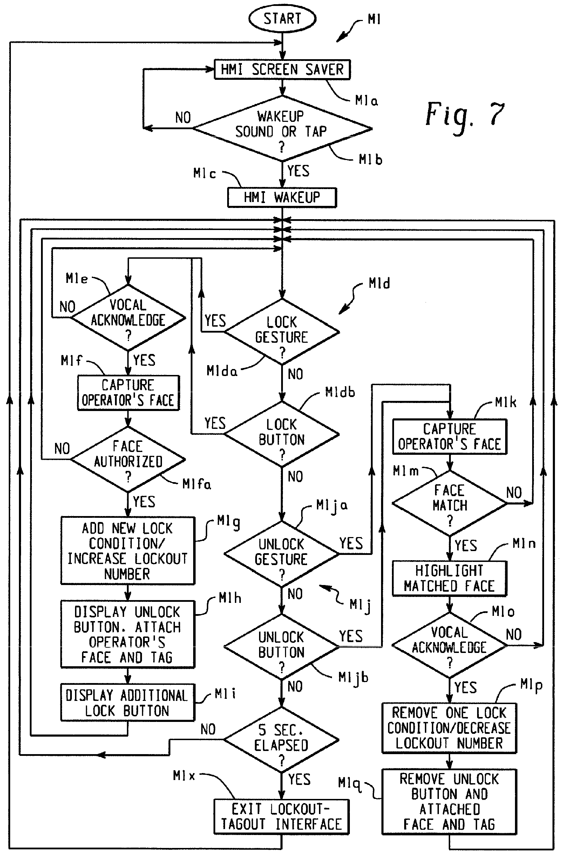

As described below with reference to Fig. 7, with the disclosed system of Figs. 1 - 6, the HMI H controls the power switch unit PSU to either open or close the at least one power switch PS1 or, if provided, both the first and second power switches PS1,PS2 in a parallel manner with respect to each other based upon at least two of: (i) facial recognition data of the operator OP as received from the 3D cameras CM1,CM2; (ii) gesture data of the operator OP as received from the 3D cameras CM1,CM2; (iii) voice data VC of the operator OP as received from the microphone 22; (iv) touch screen data input by the operator OP via interaction with the touch screen display 14. In one embodiment, the HMI H controls the power switch unit PSU in such manner based upon only: (i) facial recognition data of the operator OP; and (ii) gesture data and/or touch screen input data from the operator OP. In another embodiment, the HMI H controls the power switch unit PSU in such manner based upon: (i) facial recognition data of the operator OP; (ii) gesture data and/or touch screen input data from the operator OP; and (iii) voice data VC of the operator OP. In the illustrated example, when single power switch PS1 or either one of the first and second power switches PS1,PS2 (if two are provided) are in the open (non-conducting) state, the systems S1 and S2 can be said to be in a "locked" or inoperative condition. Conversely, when single power switch PS1 or either one of the first and second power switches PS1,PS2 (if two are provided) are in the closed (conducting) state, the systems S1 and S2 can be said to be in an "unlocked" or operative condition. It should be noted that when the emergency stop (Estop) switch/button 16 is depressed or otherwise actuated, it also causes the power switch unit PSU to enter its non-conductive state to open the one or more power switches PS1,PS2 and interrupt conduction of electrical power to the equipment E1.

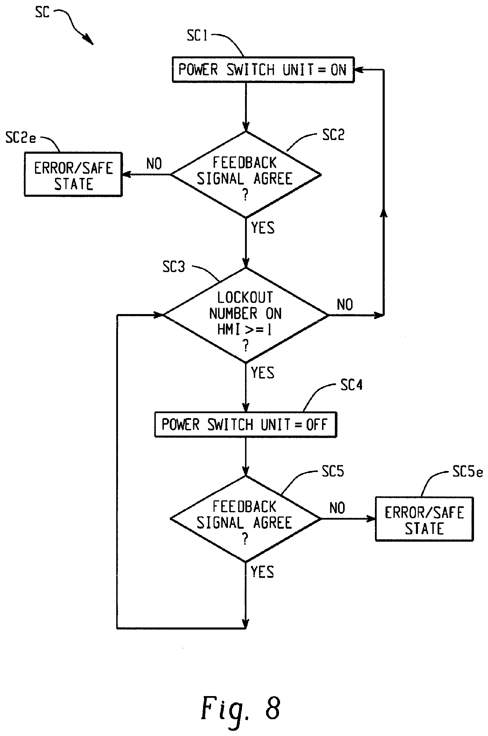

As shown in Fig. 6, the power switch unit PSU further comprises a memory PM that is utilized by the power switch controller PSC to store and track all of the lock conditions initiated by the HMI H (if the system S1 includes only a single HMI H) or initiated by each of the plurality of HMI devices H (if the system S1 includes multiple HMI devices H). The memory PM comprises volatile and/or non-volatile memory such as random access memory (RAM), non-volatile RAM, and/or a non-volatile storage device such as a disk-drive and/or solid-state storage device. The power switch controller PSC communicates and updates all active lock conditions to every HMI device H included as part of the system S1 such that each lock condition can be displayed and removed/cleared from any HMI device H of the system S1 and need not be removed/cleared from the same HMI device used to initiate the lock condition. The memory PM is also used to store and track the number of lockout conditions currently active for the system S1 at all times to ensure that the power switch unit PSU is never set to its "ON" or conductive state unless the number of lockout conditions currently active is equal to zero as described below with reference to Fig. 8. Furthermore, this memory PM can be used to store a log of timestamp data comprising time and date data and other data associated with each lockout condition such as the name and image of the operator who initiated the lockout condition. Likewise, this memory PM can be used to store a log of timestamp data comprising time and date data and other data associated with the removal of each lockout condition (an "unlock" operation) such as the name and image of the operator who initiated the "unlock" operation. Additionally or alternatively, each HMI device H can locally store a log of all lock and unlock operations initiated on such device H, including timestamp data and operator data including operator name data, operator image data, and the like.

Fig. 7 is a flow chart that illustrates an industrial equipment lock-unlock method M1 provided in accordance with an embodiment of the present development. The disclosed method M1 is performed by the HMI processor P except as otherwise noted. The method M1 optionally comprises the steps: M1a - displaying a screen saver or blank screen on the touch screen 14; M1b - determining if the HMI device H receives a wakeup sound (e.g., an operator voice) or a wakeup touch on the touchscreen 14 that indicates that the operator OP desires to preform a lock or unlock operation; M1c - waking up the HMI display 14 and displaying a lock-unlock graphical user interface UI as shown in Figs. 3 and 4 if step M1b is satisfied with a yes output (control passes from step M1b back to step M1a if the step M1b does not find the occurrence of a wakeup sound or touch).

In a step M1d the method comprises determining if the operator OP has either : (i) exhibited the first hand gesture (such as a lowercase letter "L") to indicate input of a "lock" command (sub-step Mlda); or (ii) provided first touch input via selection of a "lock" display elements 115a of the GUI114 (sub-step M1db). If either sub-step of step M1d is satisfied with a "yes" output, the method can proceed to an optional step M1e of requiring a vocal acknowledgement or affirmance from the operator OP of the lock command detected in step M1d. If the optional step M1e is performed, the lock command detected in step M1d is ignored unless the vocal acknowledgement step M1e is satisfied with a "yes" output based upon the operator OP verbally acknowledging or affirming the lock command detected in step M1d via one or more spoken words (voice) detected by the microphone 22, e.g., the operator can speak the word "yes" or the like in response to an audio or visual prompt from the HMI device H. An operator who initiates a lock operation can be referred to as a "lock operator."

If the vocal acknowledgement step M1e is satisfied (or omitted), the method next comprises the step M1f of using at least one of the cameras CM1,CM2 to capture an image of the face FC of the operator OP. The method optionally includes an optional face-matching authorization step M1fa of determining of the face image captured in step M1f matches a face of a known operator OP that is authorized to initiate a lock (power interrupt) procedure for the industrial equipment E1. The step M1fa compares the face image data captured in step M1f with a stored database of image data comprising a plurality of authorized facial images associated with and representing authorized operator faces. If the optional step M1fa is performed, the lock command detected in step M1d is ignored unless the step M1fa is satisfied and provides a "yes" output indicating that the face of the operator matches a face in the authorized face database. If the optional step M1fa is performed and an authorized face match is determined (or if the optional authorized face matching step Mlfa is omitted), the method proceeds with a step M1g in which the HMI device H adds a new active "lock" or "lockout" condition to the power switch unit PSU in addition to any preexisting active "lock" conditions associated with the PSU, and the Lockout Number is increased by one. As shown in Fig. 8, if the number of active "lock" conditions associated with the PSU (sometimes referred to as the "Lockout Number") is greater than or equal to 1 (Lockout Number ≥ 1) as determined by a step S1, the HMI commands the PSU to set the power switch PS1 or all power switches PS1,PS2 thereof to be in the open (non-conducting or "OFF") state to interrupt electrical power to the associated equipment E1 to render the equipment E1 inoperative and safe for maintenance and other activities as indicated in box S2. A step M1h is then performed as part of the method M1 to display the captured operator facial image in the facial image display element 115b of the GUI 114 and to change the state of the lock/unlock display element from "LOCK" to "UNLOCK" or similar. The method then proceeds with a step M1i of updating the GUI 114 to display another lock-unlock control region 114a if same is not already displayed.

Referring back to step M1d, if the operator OP has not either: (i) exhibited the first hand gesture (such as a lowercase letter "L") to indicate input of a "lock" command; or (ii) selected one of the "lock" display elements 115a of the GUI 114, then control of the method passes to step M1j to determine if the operator OP has either: (i) exhibited the second hand gesture (such as a letter "U") to indicate input of an "unlock" command (as determined via sub-step Mlja); or (ii) selected one of the "unlock" display elements 115a of the touchscreen GUI 114 (as determined via sub-step Mljb). If the step M1j returns a "no" output from both sub-steps M1ja and M1jb, control returns to step M1d if activity is detected by the touchscreen 14, cameras CM1,CM2 and/or microphone 22 of the HMI or the process terminates after an inactivity delay such as 5 seconds if no activity is detected by the touchscreen 14, cameras CM1,CM2 and/or microphone 22 as indicated at step M1x.

If the step M1j is satisfied with a "yes" output from either sub-step M1ja or M1jb, the method proceeds to an optional step M1k of using at least one of the cameras CM1,CM2 to capture an image of the operator's face FC and a step M1m of comparing the image captured in step M1k to an image previously captured in a prior occurrence of step M1f for a currently active "lock" condition of the HMI device H to determine of the images match (represent the same person who initiated a currently active "lock" condition). If the comparison step M1m is not satisfied (the images do not match) then the "unlock" input from step M1j is ignored because the same person who initiated the "lock" condition must terminate the "lock" condition. If the step M1m is satisfied with a "yes" (a face match for an active "lock" condition) then the GUI 114 is updated to highlight the matched facial image display region 115b of the relevant face to be highlighted or otherwise emphasized (brightened, flashing, etc.) in a step M1n and an optional step M1o can be performed to require a vocal acknowledgement or affirmation from the operator OP of the unlock command detected in step M1j. If the optional vocal acknowledgement step M1o is performed, the unlock command recognized in step M1j is ignored unless the vocal acknowledgement step M1o is satisfied with a "yes" output based upon operator voice data detected by the microphone 22, e.g., the word "yes" or the like in response to an audio or visual prompt from the HMI device H. If the vocal acknowledgement step M1o is satisfied (or omitted), the method next comprises the step M1p of removing the relevant active "lock" condition from the HMI device H for the PSU which decreases the Lockout Number by one. The step M1q is then performed to update the GUI display 114 to reset or delete the relevant lock-unlock control region 114a that was associated with the removed "lock" condition and control returns to step M1d. An operator who initiates an unlock operation to remove a lock condition can be referred to as a "unlock operator."

Fig. 8 is a flow chart that illustrates a safety counter system and method SC according to an embodiment of the present development. In the illustrated example, the power switch unit PSU is initially set to an "ON" (conducting) state in a step SC1. An optional step SC2 assesses the state of the switch feedback signal provided by the feedback module FB of the power switch unit PSU. If the step SC2 determines that the switch feedback signal does not agree with the indicated "ON" state of the power switch unit PSU, an error/safe state SC2e is initiated within the power switch unit PSU to set the power switch unit PSU to its "OFF" state and/or to otherwise disable the controlled equipment E1 to prevent an unsafe condition. The HMI display 114 can also be updated as part of the error/safe state condition SC2e to provide visual output to an operator of the error, and the error can be logged in the power switch unit memory PM. If the step SC2 determines that the feedback signal is correct (agrees with the indicated "ON" state of the power switch unit PSU), the method continues with a step SC3 to assess if the Lockout Number (the number of active "Lock" Conditions initiated for the power switch unit PSU) is greater than or equal to 1 (Lockout Number ≥ 1). If the Lockout Number ≥ 1, the power switch unit PSU is set to its "OFF" (non-conducting) state in a step SC4 such as by opening the one or more power switches PS1,PS2. An optional step SC5 assesses the state of the switch feedback signal provided by the feedback module FB of the power switch unit PSU. If the step SC5 determines that the switch feedback signal does not agree with the indicated "OFF" state of the power switch unit PSU, an error/safe state SC5e is initiated in the power switch unit PSU to open an emergency switch within the power switch unit PSU or otherwise interrupt electrical power to and/or disable the power switch unit PSU and/or to disable the controlled equipment E1 to prevent an unsafe condition. The HMI display 114 can also be updated as part of the error/safe state condition SC5e to provide visual output to an operator of the error, and the error can be logged in the power switch unit memory PM. Each HMI device H can also optionally output a warning sound via speaker 20 and/or a warning light via indicator light 18. If the step SC5 determines that the feedback signal is correct (agrees with the indicated "OFF" state of the power switch unit PSU), then steps SC3 through SC5 will repeat until the step SC3 determines that the Lockout Number is not greater than or equal to 1 (i.e., until the Lockout Number is less than 1 (Lockout Number < 1), such as when the Lockout Number = 0), upon which occurrence control returns to step SC1 in which the power switch unit PSU is again set to its an "ON" (conducting) state such as by closing the switches PS1,PS2. This safety counter system of Fig. 8 ensures that if multiple lock conditions have been initiated for the controlled system S2, the power switch unit PSU will remain in its "OFF" (non-conducting) state until all such lock conditions have been removed.

In another alternative embodiment, in an emergency situation, an operator with sufficient authority can override the system S1 and remove all existing lockout conditions established by all other operators to restore the power switch unit PSU to its "ON" condition. In another example embodiment, two or more operators with sufficient authority are required to override the system S1 in order to remove all existing lockout conditions from all other operators to restore the power switch unit PSU to its "ON" condition. In such cases, the step Mlm of Fig. 7 can verify the operator's identity and authority for such emergency operation by the facial matching operation of step M1m and the step M1p can be carried out to remove all existing lock conditions associated with the power switch unit PSY such that the power switch unit is changed to its "ON" state to activate the controlled equipment E1.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. An electronic safety function lock-unlock system comprising:
a human-machine interface device (H) comprising:
a processor (P);
a touchscreen display (TS) controlled by said processor and configured to display a plurality of display elements related to an associated controlled system;
at least one camera (CM1, CM2) configured to capture operator image data;
said human-machine interface configured to display a graphical user interface on said display comprising said plurality of display elements, wherein said graphical user interface comprises a lock-unlock control region (114a) including: i) a user-selectable button display element (14i); ii) an operator image display element (115b);
wherein said at least one camera is configured to:
capture a lock operator image of a lock operator of said human-machine interface
device when the operator initiates a lock operation for the associated controlled system by way of at least one of: i) a first input gesture captured by said at least one camera and ii) first touch input on said touchscreen display of said user-selectable button display element of said lock-unlock control region of said graphical user interface; and
capture an unlock operator image of an unlock operator of said human-machine interface device when the unlock operator initiates an unlock operation for the associated controlled system by way of at least one of: i) a second input gesture captured by said at least one camera and ii) second touch input on said touchscreen display of said user-selectable button display element of said lock-unlock control region of said graphical user interface, and
wherein said human-machine interface device is configured to: compare said unlock operator image to said lock operator image; and
initiate said unlock operation only if said unlock operator image and said lock operator image represent the same person.

2. The electronic safety function lock-unlock system as set forth in claim 1, wherein said human-machine interface device is configured such that said operator image display element of said graphical user interface displays said lock operator image when said first operator initiates said lock operation.

3. The electronic safety function lock-unlock system as set forth in claim 2, wherein said human-machine interface device is configured such that said lock-unlock control region of said graphical user interface displays a message that notifies a viewer of the touchscreen display that said lock operator shown in said operator image display element has initiated said lock operation.

4. The electronic safety function lock-unlock system as set forth in one of claims 1 to 3, at least one of:
wherein said human-machine interface device is operatively connected to a power switch unit of the associated controlled system and said human-machine interface is configured to control said power switch unit to disconnect electrical power from industrial equipment of the associated controlled system when said lock operation is initiated by said lock operator;
wherein said at least one camera comprises redundant first and second cameras; and
wherein said first and second cameras are each three-dimensional time-of-flight laser-ranging cameras.

5. The electronic safety function lock-unlock system as set forth in claim 1 to 4, wherein said human-machine interface device further comprises:
a speaker, wherein said human-machine interface device is configured to output an audible request for confirmation of at least one of said lock and unlock operations; and,
a microphone, wherein said human-machine interface device is configured to input an audible response from at least one of said lock and unlock operators in response to said audible request.

6. A method of selectively locking and unlocking an industrial system, said method comprising:
receiving a first lock input request into a first human-machine interface device from a first lock operator that indicates a first lock operation request for an associated industrial system, wherein said first lock input request comprises one of i) gesture input of the first lock operator captured by a camera and ii) touch screen input from the first lock operator;
capturing (M1f) a first lock operator facial image comprising a facial image of the first lock operator;
associating the first lock operator facial image with the first lock input request;
initiating (M1g) a first lock condition for the associated industrial system that disables the associated industrial system;
updating (M1h) a visual output display of the first human-machine interface device to display the first lock operator facial image in association with the first lock condition;
receiving a first unlock input request into said first human-machine interface device or a second human-machine interface device from a first unlock operator that indicates an unlock operation request for the associated industrial system, wherein the first unlock input request is associated with the first lock condition;
capturing (M1k) a first unlock operator facial image comprising a facial image of the first unlock operator;
associating the first unlock operator facial image with the first unlock input request;
determining (M1m) if the first unlock operator and the first lock operator are the same person, wherein said step of determining if the first unlock operator and the first lock operator are the same person comprises comparing the first unlock operator facial image with the first lock operator facial image; and
removing (M1p) said first lock condition for the associated industrial system only if said first unlock operator is the same person as the first lock operator.

7. The method as set forth in claim 6, and
the method further comprising receiving lock confirmation voice input from said first lock operator that confirms said first lock input request before initiating said first lock condition.

8. The method as set forth in claim 6 or 7, the method further comprising receiving unlock confirmation voice input from said first unlock operator that confirms said first unlock input request.

9. The method as set forth in one of claims 6 to 8, further comprising:
determining if said first lock operator is authorized;
wherein said step of initiating said first lock condition is performed only if said first lock operator is authorized.

10. The method as set forth in claim 9, wherein said step of determining if said first lock operator is authorized comprises:
comparing said first lock operator facial image to a plurality of images of authorized lock operators;
determining that said first lock operator is authorized only if said lock operator facial image matches one of the plurality of images of authorized lock operators.

11. The method as set forth in one of claims 6 to 10, further comprising:
receiving a second lock input request into said first human-machine interface device or into a second human-machine interface device from a second lock operator that indicates a second lock operation request for the associated industrial system;
capturing a second lock operator facial image comprising a facial image of the second lock operator;
associating the second lock operator facial image with the second lock input request;
initiating a second lock condition for the associated industrial system that disables the associated industrial system.

12. The method as set forth in claim 11, further comprising:
receiving a third lock input request into said first or second human-machine interface device or into a third human-machine interface device from a third lock operator that indicates a third lock operation request for the associated industrial system;
capturing a third lock operator facial image comprising a facial image of the third lock operator;
associating the third lock operator facial image with the third lock input request;
initiating a third lock condition for the associated industrial system that disables the associated industrial system;
after said third lock condition is initiated, receiving a unlock input request into said first human-machine interface device, said second human-machine interface device, said third human machine interface device, or into a fourth human machine interface device from an unlock operator that indicates an unlock operation request for the associated industrial system, wherein the unlock input request is associated with a selected one of the first lock condition, the second lock condition, or the third lock condition;
capturing a unlock operator facial image comprising a facial image of the unlock operator;
using facial recognition to determine if the unlock operator is authorized to remove the selected one of the first, second, and third lock conditions;
removing said selected one of the first, second, and third lock conditions for the associated industrial system only if the unlock operator is authorized.

## Patentansprüche

1. Ein elektronisches Sicherheitsfunktions-Verriegelungs-Entriegelungssystem, das aufweist:
eine Mensch-Maschine-Schnittstellen-Vorrichtung (H) aufweisend:
einen Prozessor (P);
eine Touchscreen-Anzeige (TS), die von dem Prozessor gesteuert wird und so konfiguriert ist, dass sie eine Vielzahl von Anzeigeelementen anzeigt, die sich auf ein zugehöriges Steuersystem beziehen;
mindestens eine Kamera (CM1, CM2), die so konfiguriert ist, dass sie Bilddaten des Bedieners erfasst;
die Mensch-Maschine-Schnittstelle, die so konfiguriert ist, dass sie eine grafische Benutzerschnittstelle auf der Anzeige anzeigt, die die Vielzahl von Anzeigeelementen aufweist, wobei die grafische Benutzerschnittstelle einen Verriegelungs-Entriegelungs-Steuerungsbereich (114a) aufweist, der Folgendes umfasst: i) ein vom Benutzer auswählbares Tasten-Anzeigeelement (14i); ii) ein Bedienerbild-Anzeigeelement (115b);
wobei die mindestens eine Kamera konfiguriert ist, um:
Erfassen eines Verriegelungsbedienerbilds eines Verriegelungsbedieners der Mensch-Maschine-Schnittstellen-Vorrichtung, wenn der Bediener einen Verriegelungsvorgang für das zugehörige gesteuerte System durch mindestens eines von Folgendem einleitet: i) eine erste Eingabegeste, die von der mindestens einen Kamera erfasst wird, und ii) eine erste Berührungseingabe auf der Touchscreen-Anzeige des vom Benutzer auswählbaren Tastenanzeigeelements des Verriegelungs-Entriegelungs-Steuerbereichs der grafischen Benutzerschnittstelle; und
Erfassen eines Verriegelungsbedienerbildes eines Verriegelungsbedieners der Mensch-Maschine-Schnittstellenvorrichtung, wenn der Verriegelungsbediener einen Verriegelungsvorgang für das zugehörige gesteuerte System mittels mindestens einer der folgenden Möglichkeiten einleitet: i) einer zweiten Eingabegeste, die von der mindestens einen Kamera erfasst wird, und ii) einer zweiten Berührungseingabe auf der Touchscreen-Anzeige des vom Benutzer auswählbaren Schaltflächen-Anzeigeelements des Verriegelungs-Entriegelungs-Steuerbereichs der grafischen Benutzerschnittstelle, und
wobei die Mensch-Maschine-Schnittstellen-Vorrichtung konfiguriert ist, um:
das Entriegelungsbedienerbild mit dem Verriegelungsbedienerbild zu vergleichen; und
den Entriegelungsvorgang nur dann einzuleiten, wenn das Entriegelungsbedienerbild und das Verriegelungsbedienerbild die gleiche Person darstellen.

2. Das elektronische Sicherheitsfunktions-Verriegelungs-Entriegelungssystem nach Anspruch 1, wobei die Mensch-Maschine-Schnittstellenvorrichtung so konfiguriert ist, dass das Bedienerbild-Anzeigeelement der grafischen Benutzerschnittstelle das Verriegelungsbedienerbild anzeigt, wenn der erste Bediener den Verriegelungsvorgang auslöst.

3. Das elektronische Sicherheitsfunktions-Verriegelungs-Entriegelungssystem nach Anspruch 2, wobei die Mensch-Maschine-Schnittstellenvorrichtung so konfiguriert ist, dass der Verriegelungs-Entriegelungs-Steuerungsbereich der grafischen Benutzerschnittstelle eine Meldung anzeigt, die einen Betrachter der Touchscreen-Anzeige darüber informiert, dass der in dem Bedienerbild-Anzeigeelement dargestellte Verriegelungsbediener den Verriegelungsvorgang eingeleitet hat.

4. Das elektronische Sicherheitsfunktions-Verriegelungs-Entriegelungssystem nach einem der Ansprüche 1 bis 3, mit mindestens einem der folgenden Merkmale:
wobei die Mensch-Maschine-Schnittstellen-Vorrichtung operativ mit einer Verriegelungseinheit des zugehörigen Steuersystems verbunden ist und die Mensch-Maschine-Schnittstelle so konfiguriert ist, dass sie die Verriegelungseinheit so steuert, dass sie die elektrische Energie von der industriellen Ausrüstung des zugehörigen Steuersystems trennt, wenn die Verriegelungsoperation von dem Bediener der Schleuse eingeleitet wird;
wobei die mindestens eine Kamera eine redundante erste und zweite Kamera aufweist; und
wobei die erste und die zweite Kamera jeweils dreidimensionale Flugzeit-Laserabtastkameras sind.

5. Das elektronische Sicherheitsfunktions-Verriegelungs-Entriegelungssystem nach Anspruch 1 bis 4, wobei die Vorrichtung für die Mensch-Maschine-Schnittstelle weiterhin aufweist:
einen Lautsprecher, wobei die Mensch-Maschine-Schnittstellen-Vorrichtung so konfiguriert ist, dass sie eine hörbare Aufforderung zur Bestätigung von mindestens einem der Verriegelungs- und Entriegelungsvorgänge ausgibt; und,
ein Mikrofon, wobei die Mensch-Maschine-Schnittstellenvorrichtung so konfiguriert ist, dass sie eine hörbare Antwort von mindestens einem der Bediener des Verriegelungs- und Entriegelungsvorgangs in Reaktion auf die hörbare Aufforderung eingibt.

6. Ein Verfahren zum selektiven Ver- und Entriegeln eines industriellen Systems, wobei das Verfahren aufweist:
Empfangen einer ersten Verriegelungsbedienungsanforderung in einer ersten Mensch-Maschine-Schnittstellenvorrichtung von einem ersten Bediener, die eine erste Verriegelungsbedienungsanforderung für ein zugehöriges industrielles System anzeigt, wobei die erste Verriegelungsbedienungsanforderung entweder i) eine Gesteneingabe des ersten Bedieners, die von einer Kamera erfasst wird, oder ii) eine Touchscreen-Eingabe des ersten Bedieners aufweist;
Erfassen (M1f) eines ersten Verriegelungsbediener-Gesichtsbildes, das ein Gesichtsbild des ersten Bedieners aufweist;
Verknüpfen des ersten Verriegelungsbedienergesichtsbildes mit der ersten Verriegelungseingabeanforderung;
Einleiten (M1g) einer ersten Sperrbedingung für das zugehörige industrielle System, die das zugehörige industrielle System deaktiviert;
Aktualisieren (M1h) einer visuellen Ausgabeanzeige der ersten Mensch-Maschine-Schnittstellenvorrichtung, um das erste Verriegelungsbediener-Gesichtsbild in Verbindung mit dem ersten Verriegelungszustand anzuzeigen;
Empfangen einer ersten Verriegelungsbedienungsanforderung in der ersten Mensch-Maschine-Schnittstellenvorrichtung oder einer zweiten Mensch-Maschine-Schnittstellenvorrichtung von einem ersten Verriegelungsbediener, der eine Verriegelungsbedienungsanforderung für die zugehörige Industrieeinrichtung anzeigt, wobei die erste Verriegelungsbedienungsanforderung mit dem ersten Verriegelungszustand verbunden ist;
Erfassen (M1k) eines ersten Entriegelungsbediener-Gesichtsbildes, das ein Gesichtsbild des ersten Entriegelungsbedieners aufweist;
Zuordnen des ersten Bediener-Gesichtsbildes zum Entsperren zu der ersten Eingabeanforderung zum Entsperren;
Bestimmen (M1m), ob der erste Entsperrungsbediener und der erste Verriegelungsbediener dieselbe Person sind, wobei der Schritt des Bestimmens, ob der erste Entsperrungsbediener und der erste Verriegelungsbediener dieselbe Person sind, das Vergleichen des Gesichtsbildes des ersten Entsperrungsbedieners mit dem Gesichtsbild des ersten Verriegelungsbedieners aufweist; und
Aufheben (M1p) der ersten Verriegelungsbedingung für das zugehörige industrielle System nur dann, wenn der erste Bediener zum Entriegeln dieselbe Person ist wie der erste Bediener zum Verriegeln.

7. Das Verfahren nach Anspruch 6, und
Das Verfahren weist ferner den Empfang einer Verriegelungsbestätigungs-Spracheingabe von dem ersten Bediener auf, die die erste Verriegelungseingabeanforderung bestätigt, bevor der erste Verriegelungszustand eingeleitet wird.

8. Das Verfahren nach Anspruch 6 oder 7, wobei das Verfahren ferner den Empfang einer Entriegelungsbestätigungs-Spracheingabe von dem ersten Bediener aufweist, die die erste Entriegelungseingabeanforderung bestätigt.

9. Das Verfahren nach einem der Ansprüche 6 bis 8, das ferner aufweist:
Bestimmen, ob der erste Bediener des Schlosses autorisiert ist;
wobei der Schritt des Einleitens des ersten Verriegelungszustandes nur durchgeführt wird, wenn der erste Bediener zum Verriegeln berechtigt ist.

10. Das Verfahren nach Anspruch 9, wobei der Schritt des Bestimmens, ob der erste Bediener autorisiert ist, aufweist:
Vergleichen des Gesichtsbildes des ersten Verriegelungsbedieners mit einer Vielzahl von Bildern von autorisierten Bedienern;
Bestimmen, dass der erste Bediener nur dann autorisiert ist, wenn das Verriegelungsbedienerbild mit einem aus der Vielzahl von Bildern autorisierter Bediener übereinstimmt.

11. Das Verfahren nach einem der Ansprüche 6 bis 10, das weiterhin aufweist:
Empfangen einer zweiten Verriegelungsbedienungsanforderung in der ersten Mensch-Maschine-Schnittstellenvorrichtung oder in einer zweiten Mensch-Maschine-Schnittstellenvorrichtung von einem zweiten Bediener, der eine zweite Verriegelungsbedienungsanforderung für das zugehörige industrielle System anzeigt;
Erfassen eines zweiten Verriegelungsbediener-Gesichtsbildes, das ein Gesichtsbild des zweiten Bedieners aufweist;
Verknüpfen des zweiten Verriegelungsbediener-Gesichtsbildes mit der zweiten Verriegelungsbedienungsanforderung;
Auslösen einer zweiten Verriegelungsbedingung für das zugehörige industrielle System, die das zugehörige industrielle System deaktiviert.

12. Das Verfahren nach Anspruch 11, das weiterhin aufweist:
Empfangen einer dritten Verriegelungseingabeanforderung in die erste oder zweite Mensch-Maschine-Schnittstellenvorrichtung oder in eine dritte Mensch-Maschine-Schnittstellenvorrichtung von einem dritten Bediener, der eine dritte Verriegelungsbedienungsanforderung für das zugehörige industrielle System anzeigt;
Erfassen eines dritten Verriegelungsbediener-Gesichtsbildes, das ein Gesichtsbild des dritten Bedieners aufweist;
Verknüpfen des Gesichtsbildes des dritten Bedieners mit der dritten Verriegelungsbedienungsanforderung;
Einleiten einer dritten Verriegelungsbedingung für das zugehörige industrielle System, die das zugehörige industrielle System deaktiviert;
Empfangen einer Entriegelungsbedienungsanforderung in der ersten Mensch-Maschine-Schnittstellenvorrichtung, der zweiten Mensch-Maschine-Schnittstellenvorrichtung, der dritten Mensch-Maschine-Schnittstellenvorrichtung oder in einer vierten Mensch-Maschine-Schnittstellenvorrichtung von einem Entriegelungsbediener, der eine Entriegelungsbedienungsanforderung für die zugehörige Industrieeinrichtung anzeigt, nachdem die dritte Verriegelungsbedingung eingeleitet ist, wobei die Entriegelungsbedienungsanforderung mit einer ausgewählten der ersten Verriegelungsbedingung, der zweiten Verriegelungsbedingung oder der dritten Verriegelungsbedingung verbunden ist;
Erfassen eines Gesichtsbildes des Entriegelungsbedieners, das ein Gesichtsbild des Entriegelungsbedieners aufweist;
Verwenden der Gesichtserkennung, um zu bestimmen, ob der Bediener zum Entfernen der ausgewählten ersten, zweiten oder dritten Verriegelungsbedingung berechtigt ist;
Aufheben der ausgewählten der ersten, zweiten und dritten Verriegelungsbedingungen für das zugehörige industrielle System nur dann, wenn der Bediener zum Entsperren autorisiert ist.

## Revendications

1. Système de verrouillage-déverrouillage à fonction de sécurité électronique comprenant :
un dispositif d'interface homme-machine (H) comprenant :
un processeur (P) ;
un affichage à écran tactile (TS) commandé par ledit processeur et configuré pour afficher une pluralité d'éléments d'affichage qui sont rapportés à un système commandé associé ; et
au moins une caméra (CM1, CM2) configurée pour capturer des données d'image d'opérateur ;
ledit dispositif d'interface homme-machine étant configuré pour afficher une interface utilisateur graphique sur ledit affichage à écran tactile qui comprend ladite pluralité d'éléments d'affichage, dans lequel ladite interface utilisateur graphique comprend une région de commande de verrouillage-déverrouillage (114a) qui inclut : i) un élément d'affichage sous forme de bouton(s) sélectionnable(s) par utilisateur (14i) ; et ii) un élément d'affichage sous forme d'image(s) d'opérateur (115b) ;
dans lequel ladite au moins une caméra est configurée pour :
capturer une image d'opérateur de verrouillage d'un opérateur de verrouillage dudit dispositif d'interface homme-machine lorsque l'opérateur de verrouillage initie une opération de verrouillage pour le système commandé associé au moyen d'au moins une action parmi : i) un premier geste d'entrée qui est capturé par ladite au moins une caméra et ii) une première entrée tactile sur ledit affichage à écran tactile dudit élément d'affichage sous forme de bouton(s) sélectionnable(s) par utilisateur de ladite région de commande de verrouillage-déverrouillage de ladite interface utilisateur graphique ; et
capturer une image d'opérateur de déverrouillage d'un opérateur de déverrouillage dudit dispositif d'interface homme-machine lorsque l'opérateur de déverrouillage initie une opération de déverrouillage pour le système commandé associé au moyen d'au moins une action parmi : i) un second geste d'entrée qui est capturé par ladite au moins une caméra et ii) une seconde entrée tactile sur ledit affichage à écran tactile dudit élément d'affichage sous forme de bouton(s) sélectionnable(s) par utilisateur de ladite région de commande de verrouillage-déverrouillage de ladite interface utilisateur graphique, et
dans lequel ledit dispositif d'interface homme-machine est configuré pour :
comparer ladite image d'opérateur de déverrouillage avec ladite image d'opérateur de verrouillage ; et
initier ladite opération de déverrouillage seulement si ladite image d'opérateur de déverrouillage et ladite image d'opérateur de verrouillage représentent la même personne.

2. Système de verrouillage-déverrouillage à fonction de sécurité électronique selon la revendication 1, dans lequel ledit dispositif d'interface homme-machine est configuré de telle sorte que ledit élément d'affichage d'image d'opérateur de ladite interface utilisateur graphique affiche ladite image d'opérateur de verrouillage lorsque ledit premier opérateur initie ladite opération de verrouillage.

3. Système de verrouillage-déverrouillage à fonction de sécurité électronique selon la revendication 2, dans lequel ledit dispositif d'interface homme-machine est configuré de telle sorte que ladite région de commande de verrouillage-déverrouillage de ladite interface utilisateur graphique affiche un message qui notifie à un observateur de l'affichage à écran tactile que ledit opérateur de verrouillage qui est représenté dans ledit élément d'affichage d'image d'opérateur a initié ladite opération de verrouillage.

4. Système de verrouillage-déverrouillage à fonction de sécurité électronique selon l'une quelconque des revendications 1 à 3, dans lequel au moins l'une des assertions suivantes est satisfaite :
ledit dispositif d'interface homme-machine est connecté de manière opérationnelle à une unité de commutateur d'alimentation électrique du système commandé associé et ledit dispositif d'interface homme-machine est configuré pour commander ladite unité de commutateur d'alimentation électrique afin de déconnecter l'alimentation électrique d'un équipement industriel du système commandé associé lorsque ladite opération de verrouillage est initiée par ledit opérateur de verrouillage ;
ladite au moins une caméra comprend des première et seconde caméras redondantes ; et
lesdites première et seconde caméras sont chacune des caméras tridimensionnelles à télémétrie laser et à mesure de temps de vol.

5. Système de verrouillage-déverrouillage à fonction de sécurité électronique selon l'une quelconque des revendications 1 à 4, dans lequel ledit dispositif d'interface homme-machine comprend en outre :
un haut-parleur, dans lequel ledit dispositif d'interface homme-machine est configuré pour émettre en sortie une requête audible pour la confirmation d'au moins l'une desdites opérations de verrouillage et de déverrouillage ; et
un microphone, dans lequel ledit dispositif d'interface homme-machine est configuré pour recevoir en entrée une réponse audible en provenance d'au moins l'un desdits opérateurs de verrouillage et de déverrouillage en réponse à ladite requête audible.

6. Procédé de verrouillage et de déverrouillage de façon sélective d'un système industriel, ledit procédé comprenant :
la réception d'une première requête d'entrée de verrouillage à l'intérieur d'un premier dispositif d'interface homme-machine en provenance d'un premier opérateur de verrouillage qui indique une première requête d'opération de verrouillage pour un système industriel associé, dans lequel ladite première requête d'entrée de verrouillage comprend au moins une entrée parmi : i) une entrée de geste du premier opérateur de verrouillage qui est capturée par une caméra et ii) une entrée d'écran tactile en provenance du premier opérateur de verrouillage ;
la capture (M1f) d'une image de visage de premier opérateur de verrouillage qui comprend une image de visage du premier opérateur de verrouillage ;
l'association de l'image de visage de premier opérateur de verrouillage avec la première requête d'entrée de verrouillage ;
l'initiation (M1g) d'une première condition de verrouillage pour le système industriel associé qui invalide le système industriel associé ;
la mise à jour (M1h) d'un affichage de sortie visuelle du premier dispositif d'interface homme-machine pour afficher l'image de visage de premier opérateur de verrouillage en association avec la première condition de verrouillage ;
la réception d'une première requête d'entrée de déverrouillage à l'intérieur dudit premier dispositif d'interface homme-machine ou d'un deuxième dispositif d'interface homme-machine en provenance d'un premier opérateur de déverrouillage qui indique une requête d'opération de déverrouillage pour le système industriel associé, dans lequel la première requête d'entrée de déverrouillage est associée à la première condition de verrouillage ;
la capture (M1k) d'une image de visage de premier opérateur de déverrouillage qui comprend une image de visage du premier opérateur de déverrouillage ;
l'association de l'image de visage de premier opérateur de déverrouillage avec la première requête d'entrée de déverrouillage ;
la détermination (M1m) de si le premier opérateur de déverrouillage et le premier opérateur de verrouillage sont la même personne, dans lequel ladite étape de détermination de si le premier opérateur de déverrouillage et le premier opérateur de verrouillage sont la même personne comprend la comparaison de l'image de visage de premier opérateur de déverrouillage avec l'image de visage de premier opérateur de verrouillage ; et
la suppression (M1p) de ladite première condition de verrouillage pour le système industriel associé seulement si ledit premier opérateur de déverrouillage est la même personne que le premier opérateur de verrouillage.

7. Procédé selon la revendication 6, et le procédé comprenant en outre la réception d'une entrée vocale de confirmation de verrouillage en provenance dudit premier opérateur de verrouillage qui confirme ladite première requête d'entrée de verrouillage avant l'initiation de ladite première condition de verrouillage.

8. Procédé selon la revendication 6 ou 7, le procédé comprenant en outre la réception d'une entrée vocale de confirmation de déverrouillage en provenance dudit premier opérateur de déverrouillage qui confirme ladite première requête d'entrée de déverrouillage.

9. Procédé selon l'une quelconque des revendications 6 à 8, comprenant en outre :
la détermination de si ledit premier opérateur de verrouillage est autorisé ;
dans lequel ladite étape d'initiation de ladite première condition de verrouillage est effectuée seulement si ledit premier opérateur de verrouillage est autorisé.

10. Procédé selon la revendication 9, dans lequel ladite étape de détermination de si ledit premier opérateur de verrouillage est autorisé comprend :
la comparaison de ladite image de visage de premier opérateur de verrouillage avec une pluralité d'images d'opérateurs de verrouillage autorisés ; et
la détermination du fait que ledit premier opérateur de verrouillage est autorisé seulement si ladite image de visage de premier opérateur de verrouillage correspond à l'une de la pluralité d'images d'opérateurs de verrouillage autorisés.

11. Procédé selon l'une quelconque des revendications 6 à 10, comprenant en outre :
la réception d'une deuxième requête d'entrée de verrouillage à l'intérieur dudit premier dispositif d'interface homme-machine ou à l'intérieur d'un deuxième dispositif d'interface homme-machine en provenance d'un deuxième opérateur de verrouillage qui indique une deuxième requête d'opération de verrouillage pour le système industriel associé ;
la capture d'une image de visage de deuxième opérateur de verrouillage qui comprend une image de visage du deuxième opérateur de verrouillage ;
l'association de l'image de visage de deuxième opérateur de verrouillage avec la deuxième requête d'entrée de verrouillage ; et
l'initiation d'une deuxième condition de verrouillage pour le système industriel associé qui invalide le système industriel associé.

12. Procédé selon la revendication 11, comprenant en outre :
la réception d'une troisième requête d'entrée de verrouillage à l'intérieur dudit premier ou deuxième dispositif d'interface homme-machine ou à l'intérieur d'un troisième dispositif d'interface homme-machine en provenance d'un troisième opérateur de verrouillage qui indique une troisième requête d'opération de verrouillage pour le système industriel associé ;
la capture d'une image de visage de troisième opérateur de verrouillage qui comprend une image de visage du troisième opérateur de verrouillage ;
l'association de l'image de visage de troisième opérateur de verrouillage avec la troisième requête d'entrée de verrouillage ;
l'initiation d'une troisième condition de verrouillage pour le système industriel associé qui invalide le système industriel associé ;
après que ladite troisième condition de verrouillage est initiée, la réception d'une requête d'entrée de déverrouillage à l'intérieur dudit premier dispositif d'interface homme-machine, dudit deuxième dispositif d'interface homme-machine, dudit troisième dispositif d'interface homme-machine ou à l'intérieur d'un quatrième dispositif d'interface homme-machine en provenance d'un opérateur de déverrouillage qui indique une requête d'opération de déverrouillage pour le système industriel associé, dans lequel la requête d'entrée de déverrouillage est associée à une condition sélectionnée parmi la première condition de verrouillage, la deuxième condition de verrouillage et la troisième condition de verrouillage ;
la capture d'une image de visage d'opérateur de déverrouillage qui comprend une image de visage de l'opérateur de déverrouillage ;
l'utilisation de la reconnaissance de visage pour déterminer si l'opérateur de déverrouillage est autorisé à supprimer la condition sélectionnée parmi les première, deuxième et troisième conditions de verrouillage ; et
la suppression de ladite condition sélectionnée parmi les première, deuxième et troisième conditions de verrouillage pour le système industriel associé seulement si l'opérateur de déverrouillage est autorisé.
